# EUROPÄISCHE PATENTANMELDUNG

(11) **EP 4 851 861 A1**
(43) Veröffentlichungstag der Anmeldung: **09.12.2026**
(21) Anmeldenummer: 25181034.7
(22) Anmeldetag: 05.06.2025
(51) Int. Cl.: G06N 3/0455, G06N 3/0895, G06N 3/094

(54) **VERFAHREN ZUM TRAINIEREN EINES MASCHINELLEN LERNMODELLS, TRAJEKTORIEN VON AGENTEN FÜR EINE SIMULATION ZUM TESTEN EINER STEUERUNGSSTRATEGIE EINER ROBOTERVORRICHTUNG ZU ERZEUGEN**

(71) Anmelder: Robert Bosch GmbH, 70442 Stuttgart (DE)
(72) Erfinder: Goth, Johannes, 72218 Wildberg (DE); Naumann, Maximilian, 66663 Merzig (DE); Bitzer, Matthias, 70197 Stuttgart (DE); Cimurs, Reinis, 70176 Stuttgart (DE); Ziesche, Sebastian, 71229 Leonberg (DE)

(57) **Zusammenfassung**

Gemäß verschiedenen Ausführungsformen wird ein Verfahren zum Trainieren eines maschinellen Lernmodells (200), Trajektorien von Agenten für eine Simulation zum Testen einer Steuerungsstrategie einer Robotervorrichtung (101) zu erzeugen, beschrieben, aufweisend, für jede Trainings-Multi-Agent-Trajektorie (208) aus einer Menge von Trainings-Multi-Agent-Trajektorien (208), Codieren der Trainings-Multi-Agent-Trajektorie (208) mittels eines Encoders (201), wobei der Encoder (201) jede Trainings-Agenten-Trajektorie der Trainings-Multi-Agent-Trajektorie (208) auf einen jeweiligen Vektor eines kontinuierlichen latenten Raums abbildet und den Vektor auf denjenigen Codebuch-Vektor aus einem trainierbaren Codebuch (203), das Vektoren aus dem kontinuierlichen latenten Raum enthält, abbildet, der dem Vektor am nächsten liegt, Erzeugen einer Rekonstruktion der Trainings-Multi-Agent-Trajektorie aus den Codebuch-Vektoren mittels eines autoregressiven Decoders (202), Ermitteln eines Rekonstruktionsverlusts sowie eines Quantisierungsverlusts und Trainieren des Encoders (201), des Decoders (202)und des Codebuchs (203) zum Reduzieren eines Verlusts, der zumindest die Rekonstruktionsverluste und die Quantisierungsverluste enthält.

## Beschreibung

Die vorliegende Offenbarung bezieht sich auf Verfahren zum Trainieren eines maschinellen Lernmodells, Trajektorien von Agenten für eine Simulation zum Testen einer Steuerungsstrategie einer Robotervorrichtung zu erzeugen.

In den letzten Jahren wurde autonomes Fahren ein Thema großen Interesses sowohl in der Forschung als auch in der Öffentlichkeit. Autonome Fahrzeuge haben ein enormes Potential, nicht nur wirtschaftlich, sondern auch zur Verbesserung der Mobilitätsmöglichkeiten und potenziell zur Reduzierung von Kohlenstoff-Emissionen. Wie jedes Steuern beinhaltet autonomes Fahren das Treffen von Entscheidungen in einer jeweiligen Steuersituation zur Auswahl einer Steueraktion. Dieser Steueraktionen sollen sicher sein, d.h. sie sollen nicht zu gefährlichen Situationen führen. Um ihre Zuverlässigkeit und Sicherheit zu testen, müssen Steuerungen für autonomes Fahren ausgiebig getestet werden. Da dies mit realen Tests zu aufwändig oder auch zu gefährlich wäre, erfolgt dies mittels Simulationen. Dazu müssen allerdings andere Verkehrsteilnehmer realistisch simuliert werden.

Es sind somit Verfahren wünschenswert, die Verkehrsteilnehmer, oder allgemein Agenten (z.B. im Kontext von anderen Robotervorrichtungen als autonomen Fahrzeugen wie Roboterarme, Laufroboter, etc.) in einer jeweiligen Steuersituation simulieren, um eine jeweilige Steuersituation zuverlässig testen zu können. Gemäß verschiedenen Ausführungsformen wird ein Verfahren zum Trainieren eines maschinellen Lernmodells, Trajektorien von Agenten für eine Simulation zum Testen einer Steuerungsstrategie einer Robotervorrichtung zu erzeugen, bereitgestellt, aufweisend:
- für jede Trainings-Multi-Agent-Trajektorie aus einer Menge von Trainings-Multi-Agent-Trajektorien, wobei jede Trainings-Multi-Agent-Trajektorie für jeden Agenten mehrerer Agenten eine jeweilige Trainings-Agenten-Trajektorie enthält,
   ∘ Codieren der Trainings-Multi-Agent-Trajektorie mittels eines Encoders, wobei der Encoder jede Trainings-Agenten-Trajektorie der Trainings-Multi-Agent-Trajektorie auf einen jeweiligen Vektor eines kontinuierlichen latenten Raums abbildet und den Vektor auf denjenigen Codebuch-Vektor aus einem trainierbaren Codebuch, das Vektoren aus dem kontinuierlichen latenten Raum enthält, abbildet, der dem Vektor am nächsten liegt,
   ∘ Erzeugen einer Rekonstruktion der Trainings-Multi-Agent-Trajektorie aus den Codebuch-Vektoren, auf den die Vektoren aus dem kontinuierlichen latenten Raum abgebildet wurden, mittels eines autoregressiven Decoders,
   ∘ Ermitteln eines Rekonstruktionsverlusts zwischen der Rekonstruktion der Trainings-Multi-Agent-Trajektorie und der Trainings-Multi-Agent-Trajektorie sowie eines Quantisierungsverlusts zwischen den Vektoren aus dem kontinuierlichen latenten Raum und den Codebuch-Vektoren, auf den sie abgebildet werden, und
- Trainieren des Encoders, des Decoders und des Codebuchs zum Reduzieren eines Verlusts, der zumindest die Rekonstruktionsverluste und die Quantisierungsverluste enthält.

Das oben beschriebene Verfahren ermöglicht das Training eines maschinellen Lernmodells für die Erzeugung von Trajektorien von Agenten (z.B. Verkehrsteilnehmern) mit hohem Realismus und konsistentem Verhalten für Simulationen und ermöglicht damit letztendlich verbesserte Steuerungsstrategien (z.B. autonome Fahrsysteme).

Das obige Verfahren kann als Verwendung eines vektorquantisierten Variations-Autoencoder (VQ-VAE für vector-quantized variational autoencoder) für die Erzeugung von Multi-Agent-Trajektorien angesehen werden. Die Verwendung eines solchen Ansatzes ermöglicht eine Konditionierung eines Agentenverhaltensmodells (wie es das maschinelle Lernmodell implementiert) und ermöglicht die Erzeugung von multimodalen und dennoch deterministischen Verhalten. Letzteres ist wichtig für die Reproduzierbarkeit: Wenn beispielsweise bei einem bestimmten Simulationslauf ein Fehler in einem Steuersystem gefunden wird, ist es wünschenswert, dass dieser Simulationslauf reproduziert werden kann, um zu sehen, ob Änderungen am Steuerungsalgorithmus das Verhalten verbessern.

Im Folgenden werden verschiedene Ausführungsbeispiele angegeben.

Ausführungsbeispiel 1 ist ein Verfahren zum Trainieren eines maschinellen Lernmodells, wie oben beschrieben.

Ausführungsbeispiel 2 ist das Verfahren nach Ausführungsbeispiel 1, aufweisend Bereitstellen der Menge von Trainings-Multi-Agent-Trajektorien, wobei, für jede Trainings-Multi-Agent-Trajektorie und für jeden Agenten, die Trainings-Agenten-Trajektorie, die die Trainings-Multi-Agent-Trajektorie für den Agenten enthält, gemäß einem jeweiligen Agentenverhaltenstyp ausgestaltet ist, wobei sich die Agentenverhaltenstypen zumindest für manche der Trainings-Multi-Agent-Trajektorien und/oder der Trainings-Agenten-Trajektorien unterscheiden.

Durch das Trainieren, insbesondere des Codebuchs, kann erwartet werden, dass jeder Codebuch-Vektor einen jeweiligen Agentenverhaltenstyp repräsentiert. Mit dem trainierten maschinellen Lernmodell können dann Agenten, die sich nach unterschiedlichen Agentenverhaltenstypen verhalten, simuliert werden.

Ausführungsbeispiel 3 ist das Verfahren nach Ausführungsbeispiel 1 oder 2, wobei der Verlust ferner einen Verlust aufweist, der es bestraft, wenn eine oder mehrere der rekonstruierten Trainings-Multi-Agent-Trajektorien kein realistisches Verhalten aufweisen.

Beispiele für ein nicht realistisches Verhalten sind das Auftreten von Kollisionen, oder das Verlassen eines vorgegeben Bereichs (z.B. Verlassen einer Straße, d.h. Offroad-Fahren).

Ausführungsbeispiel 4 ist das Verfahren nach einem der Ausführungsbeispiele 1 bis 3, wobei der Quantisierungsverlust für jede Trainings-Agenten-Trajektorie den Quantisierungsfehler zwischen dem Vektor aus dem kontinuierlichen latenten Raum und dem Codebuch-Vektor, auf den er abgebildet wird, enthält.

Somit werden Encoder und Codebuch derart trainiert, dass die Codebuch-Vektoren möglichst gut an den (kontinuierlichen) latenten Repräsentationen von Trajektorien liegen, die der Encoder erzeugt. Somit wird ein diskreter latenter Raum (das Codebuch) gelernt, der die Trajektorien gut repräsentiert.

Der Quantisierungsverlust kann auch zwei Komponenten haben, die beide die Form |x-c| haben, wobei x der vom Encoder gelieferte latente Vektor ist und c der nächstgelegene Codebuch-Eintrag. Der Unterschied dieser zwei Komponenten ist, dass einmal c fix ist und einmal x und dass beide mit unterschiedlichen Gewichten in den Gesamtverlust einfließen (können). Es kann auch lediglich die erste dieser Komponenten als "Quantisierungsverlust" bezeichnet werden und die zweite als "Codebuch-Verlust".

Ausführungsbeispiel 5 ist das Verfahren nach einem der Ausführungsbeispiele 1 bis 4, wobei der Verlust ferner einen Multi-Agent-Generatives-Adversarial-Imitations-Lernen-Verlust (MGAIL für engl. Multi-Agent Generative Adversarial Imitation Learning) der Rekonstruktionen der Trainings-Multi-Agent-Trajektorien aufweist.

Dies verbessert das Training dahingehend, dass nach dem Training realistische Trajektorien erzeugt werden können.

Ausführungsbeispiel 6 ist das Verfahren nach einem der Ausführungsbeispiele 1 bis 5, wobei jede Trainings-Multi-Agent-Trajektorie eine Trainings-Multi-Agent-Trajektorie für eine jeweilige Steuerungssituation ist und der autoregressive Decoder die Trainings-Multi-Agent-Trajektorie unter Verwendung von ihm zugeführten Informationen über die jeweiligen Steuerungssituation rekonstruiert.

Nach dem Training können somit Steuerungssituationen (z.B. Verkehrssituationen) vorgegeben werden, für die Trajektorien erzeugt werden können (d.h. das Verhalten von Agenten in der jeweiligen Steuerungssituation simuliert werden kann).

Ausführungsbeispiel 7 ist das Verfahren nach Ausführungsbeispiel 6, ferner aufweisend, für jede zumindest eines Teils der Multi-Agenten-Trajektorie, Erzeugen von oder mehreren zusätzlichen Multi-Agenten-Trajektorien durch (z.B. zufälliges) Auswählen eines Codebuch-Vektors für jeden der mehreren Agenten, für den die Multi-Agenten-Trajektorie eine Trajektorie enthält und Zuführen der ausgewählten Menge von Codebuch-Vektoren und den Informationen über die jeweilige Steuerungssituation zu dem Decoder, wobei der Verlust ein oder mehrere zusätzliche Verlustkomponenten abhängig von den erzeugten zusätzlichen Multi-Agenten-Trajektorien enthält.

Damit wird das Training des Decoders dahingehend verbessert, auch für z.B. zufällig ausgewählte Codebuch-Vektoren sinnvolle Trajektorien zu erzeugen, die für eine Simulation verwendet werden können.

Ausführungsbeispiel 8 ist das Verfahren nach Ausführungsbeispiel 7, wobei die zusätzlichen Verlustkomponenten Verlustkomponenten aufweisen, die es bestrafen wenn eine oder mehrere der erzeugten zusätzlichen Multi-Agenten-Trajektorien kein realistisches Verhalten aufweisen und oder Multi-Agent-Generatives-Adversarial-Imitations-Lernen-Verluste der erzeugten zusätzlichen Multi-Agenten-Trajektorien aufweisen.

Dies verbessert das Training weiter dahingehend, dass nach dem Training realistische Trajektorien erzeugt werden können.

Ausführungsbeispiel 9 ist eine Trainingseinrichtung, die eingerichtet ist, das Verfahren nach einem der Ausführungsbeispiele 1 bis 8 durchzuführen.

Ausführungsbeispiel 10 ist das Verfahren zum Erzeugen einer Multi-Agenten-Trajektorie, die für jeden mehrerer Agenten eine Trajektorie enthält, für eine Steuerungssituation aufweisend:
Trainieren eines maschinellen Lernmodells nach einem der Ausführungsbeispiele 1 bis 8,
Auswählen einer Menge von Codebuch-Vektoren aus dem Codebuch (z.B. zufällig, z.B. gemäß einer Gleichverteilung der Codebuch-Vektoren), durch Auswählen eines Codebuch-Vektors für jeden der mehreren Agenten,
Erzeugen der Multi-Agenten-Trajektorie durch Zuführen der ausgewählten Menge von Codebuch-Vektoren und Informationen über die Steuerungssituation zu dem Decoder.

Ausführungsbeispiel 11 ist das Verfahren zum Testen eines Steuerungsverfahrens für eine Robotervorrichtung, aufweisend Simulieren eines Steuerszenarios mit einem oder mehreren Agenten, wobei der eine oder die mehreren Agenten gemäß Trajektorien gesteuert werden, die durch das Verfahren nach Ausführungsbeispiel 10 erzeugt werden, und die Robotervorrichtung gemäß dem Steuerungsverfahren gesteuert wird.

Ausführungsbeispiel 12 ist eine Testeinrichtung, die eingerichtet ist, das Verfahren nach Ausführungsbeispiel 11 durchzuführen.

Ausführungsbeispiel 13 ist ein Computerprogramm mit Befehlen, die, wenn sie durch einen Prozessor ausgeführt werden, bewirken, dass der Prozessor ein Verfahren nach einem der Ausführungsbeispiele 1 bis 8 oder 10 oder 11 durchführt.

Ausführungsbeispiel 14 ist ein computerlesbares Medium, das Befehle speichert, die, wenn sie durch einen Prozessor ausgeführt werden, bewirken, dass der Prozessor ein Verfahren nach einem der Ausführungsbeispiele 1 bis 8 oder 10 oder 11 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.
Figur 1 zeigt ein Fahrzeug als Beispiel für eine zu steuernde Robotervorrichtung.
Figur 2 veranschaulicht ein maschinelles Lernmodell 200 mit einer VQ-VAE-Architektur gemäß einer Ausführungsform.
Figur 3 zeigt ein Ablaufdiagramm, das ein Verfahren zum Trainieren eines maschinellen Lernmodells, Trajektorien von Agenten für eine Simulation zum Testen einer Steuerungsstrategie einer Robotervorrichtung zu erzeugen, gemäß einer Ausführungsform veranschaulicht.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

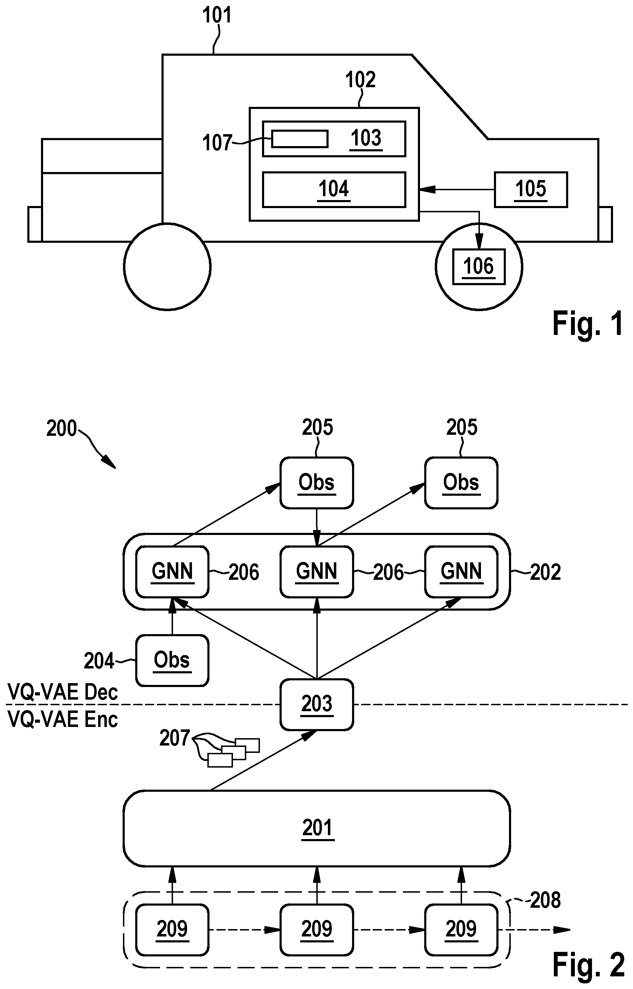

Figur 1 zeigt ein Fahrzeug 100 als Beispiel für eine zu steuernde Robotervorrichtung.

Im Beispiel von Figur 1 ist ein Fahrzeug 101, beispielsweise ein PKW oder LKW, mit einer Fahrzeugsteuereinrichtung 102 versehen.

Die Fahrzeugsteuereinrichtung 102 weist Datenverarbeitungskomponenten auf, z.B. einen Prozessor (z.B. eine CPU (Zentraleinheit)) 103 und einen Speicher 104 zum Speichern von Steuersoftware, gemäß der die Fahrzeugsteuereinrichtung 102 arbeitet, und Daten, die von dem Prozessor 103 verarbeitet werden.

Beispielsweise weist die gespeicherte Steuerungssoftware (Computerprogramm) Anweisungen auf, die, wenn der Prozessor sie ausführt, bewirken, dass der Prozessor 103 ein oder mehrere neuronale Netzwerke 107 implementiert.

Die im Speicher 104 gespeicherten Daten können beispielsweise Bilddaten beinhalten, die von einer oder mehreren Kameras 105 erfasst werden. Die eine oder die mehreren Kameras 105 können beispielsweise ein oder mehrere Graustufen- oder Farbfotos der Umgebung des Fahrzeugs 101 aufnehmen.

Die Fahrzeugsteuereinrichtung 102 kann unter Verwendung der Bilddaten (oder auch Daten von anderen Informationsquellen, wie anderer Arten von Sensoren oder auch Fahrzeug-Fahrzeug-Kommunikation) Objekte in der Umgebung des Fahrzeugs 101 detektieren, insbesondere andere Fahrzeuge.

Die Fahrzeugsteuereinrichtung 102 kann die Sensordaten untersuchen und das Fahrzeug 101 gemäß den Ergebnissen steuern, d.h. Steuerungsaktionen für das Fahrzeug ermitteln und an jeweilige Aktoren des Fahrzeugs signalisieren. So kann die Fahrzeugsteuereinrichtung 102 beispielsweise einen Aktuator 106 (z.B. eine Bremse) steuern, um die Geschwindigkeit des Fahrzeugs zu steuern, z.B. um das Fahrzeug zu bremsen.

Die Steuerungsstrategie, die von der Fahrzeugsteuereinrichtung 102 verwendet wird, muss vor ihrem Einsatz im realen Straßenverkehr ausgiebig getestet werden. Dies erfolgt typischerweise mit Simulationen, für die andere Fahrzeuge (d.h. andere Verkehrsteilnehmer als das Ego-Fahrzeug, dessen Steuerungsstrategie getestet werden soll) simuliert werden. Dazu können Fahrermodelle gelernt (d.h. trainiert) werden, gemäß sich denen die anderen Fahrzeuge in der Simulation verhalten.

Um die zu testende Steuerungsstrategie in Verkehrssituationen testen zu können, in denen mehrere andere Verkehrsteilnehmer vorhanden sind, werden Multi-Agent-Trajektorien simuliert. Diese enthalten für jeden anderen Verkehrsteilnehmer eine eigene Trajektorie, aber sie werden zusammen als Multi-Agent-Trajektorie simuliert, damit die simulierten Verkehrsteilnehmer sich realistisch "als Ganzes" verhalten, d.h. ihr (simuliertes) Verhalten aneinander anpassen und sich nicht jeder der Verkehrsteilnehmer so verhält, also wäre er in der jeweiligen Verkehrssituation allein, was nicht realistisch wäre.

Es sind also Herangehensweisen wünschenswert, um realistische Multi-Agent-Trajektorien zu erzeugen. Gemäß verschiedenen Ausführungsformen wird ein maschinelles Lernmodell bereitgestellt, das Multi-Agent-Trajektorien erzeugt (d.h. ausgehend von einer aktuellen Verkehrssituation vorhersagt), die das Verhalten von Verkehrsteilnehmern simulieren. Die Multi-Agent-Trajektorien können dann für das Testen (oder Allgemein die Entwicklung) einer Fahrzeugsteuerungsstrategie für ein Ego-Fahrzeug (das sich in der Verkehrssituation angemessen verhalten soll und insbesondere auf die anderen Verkehrsteilnehmer Rücksicht nehmen soll) verwendet werden.

Das maschinelle Lernmodell ist also ein "Verkehrsagentenmodell", d.h. ein maschinelles Lernmodell, das das Verhalten anderer (typischerweise nicht automatisierter) Verkehrsteilnehmer simuliert oder vorhersagt. Um realistische Bedingungen zu schaffen, sollte das simulierte Verhalten multimodal sein, da sich verschiedene Personen unterschiedlich verhalten (z.B. gibt es aggressivere Fahrer, langsame Fahrer etc.).

Gemäß verschiedenen Ausführungsformen wird zur Modellierung einer solchen Multimodalität ein vektorquantisierten Variations-Autoencoder (engl. variational autoencoder VAE), abgekürzt VQ-VAE, als maschinelles Lernmodell verwendet. Dies ermöglicht die Konditionierung auf verschiedene Fahrer(verhaltens)typen (allgemein Agenten(verhaltens)typen), sodass Multi-Agent-Trajektorien mit jeweils Trajektorien entsprechend unterschiedlicher Fahrertypen (bzw. allgemein Agententypen) erzeugt werden können.

Der VQ-VAE ermöglicht nach seinem Training die Erzeugung von multimodalem Verhalten durch Auswahl eines Codebuchvektors aus einem (mittrainierten) Codebuch und gewährleistet dabei auch deterministisches (d.h. reproduzierbares) Verhalten der Agenten: Für jeden Agenten wird ein Codebuchvektor ausgewählt, ist dies derselbe für zwei Agenten, verhalten sich die beiden Agenten identisch (vorausgesetzt die Steuerungssituation ist auch dieselbe). Das Codebuch (engl. codebook) ist eine Sammlung von Vektoren, die unterschiedliche Fahrertypen insofern codiert, dass idealerweise nach dem Training jeder Codebuch-Vektor einem jeweiligen Fahrertyp entspricht (wobei allerdings Überschneidungen auftreten können).

Ein VQ-VAE ist eine Art Variationsautoencoder, der Vektorquantisierung verwendet, um zu einer Eingabe eine diskrete latente Darstellung zu liefern (d.h. der latente Raum ist diskretisiert im Unterschied zu einem "normalen" VAE, bei dem er kontinuierlich ist). Außerdem wird der Prior gelernt, statt statisch zu sein wie beim VAE.

Damit er diskrete latente Darstellung lernt, basiert der VQ-VAE auf Ideen aus der Vektorquantisierung (VQ). Durch die Ausgestaltung als VQ-VAE werden bei dem Verkehrsagentenmodell Probleme des Posterior-Kollapses umgangen, bei dem die (ausgewählten oder gesampelten) latenten Vektoren ignoriert werden, wenn sie mit einem leistungsstarken autoregressiven Decoder gepaart werden, was typischerweise beim VAE beobachtet werden kann.

Der Encoder des VQ-VAE bildet jede Multi-Agent-Trajektorie, die ihm zugeführt wird, auf einen Satz von Codebuch-Vektoren aus einem Codebuch (d.h. aus einer diskreten Menge von Vektoren) ab: Jede in der Multi-Agent-Trajektorie enthaltene (Agenten-)Trajektorie wird auf einen jeweiligen Vektor des Codebuchs abgebildet. Die Vektoren des Codebuchs sind Vektoren des latenten Raums. Da der Encoder nur auf Vektoren des Codebuchs abbildet, hat der latente Raum, auf den der Encoder abbildet, letztendlich eine diskrete Struktur.

Für die Inferenz, also die Erzeugung einer simulierten Multi-Agent-Trajektorie wird für jeden Agenten ein Codebuch-Vektor gesampelt (also insgesamt wird für die Multi-Agent-Trajektorie ein Satz von Codebuch-Vektoren mit einem Codebuch-Vektor pro Agent gesampelt) und dieser Satz von Codebuch-Vektoren dem Decoder des VQ-VAE zugeführt, der daraus eine Multi-Agent-Trajektorie erzeugt. Da nach dem Training erwartet werden kann, dass jeder Codebuch-Vektor ein bestimmtes Fahrerverhalten repräsentiert, wird durch diese Auswahl der Decoder auf ein Fahrerverhalten für jeden Agenten konditioniert. Durch die Auswahl spezifischer Codebuchvektoren kann ein deterministisches Verhalten der Agenten (z.B. Verkehrsteilnehmer) sichergestellt werden, was für eine zuverlässige Simulation und Auswertung der Testergebnisse (der zu testenten Steuerungsstrategie) von entscheidender Bedeutung ist.

Die VQ-VAE wird wie folgt trainiert:
1. Datenerfassung: Sammeln von Trajektorien und Informationen über Verkehrssituationen (z.B. Kartendaten) für Agenten, d.h. einer Menge von Trainingsbeispielen mit jeweils einer Multi-Agent-Trajektorie und einer Verkehrssituation.
2. Merkmalsextraktion: Extraktion relevanter Merkmale aus den Trajektorien für jeden Agenten, wie z. B. Geschwindigkeit, Position und Interaktion mit anderen Agenten (z.B. für jeden Zeitpunkt einer Folge von Zeitpunkten).
3. Abbilden der extrahierten Merkmale (pro Trajektorie, d.h. pro Agent) auf einen Vektor des diskreten latenten Raums, d.h. einen Codebuch-Eintrag (dies geschieht typischerweise in der Regel über die Zeit aggregiert, d.h. die Merkmale einer Trajektorie über eine Folge von Zeitpunkten werden auf einen Codebuch-Eintrag abgebildet) durch den Encoder des VQ-VAE.
4. Codebuch-Vektorauswahl (pro Trainingsbeispiel): Im Training wird für jede Multi-Agent-Trajektorie der Satz von Codebuch-Vektoren, auf den die Trajektorien abgebildet wurden, dem Decoder zugeführt.
5. Verhaltensgenerierung (pro Trainingsbeispiel): Der Decoder erzeugt das Agentenverhalten auf der Grundlage der ausgewählten Codebuch-Vektoren, d.h. erzeugt eine Multi-Agent-Trajektorie gemäß dem Satz von Codebuch-Vektoren, auf den die Trajektorien der Multi-Agent-Trajektorie des Trainingsbeispiels vom Encoder abgebildet wurden. Hierbei wird ein differenzierbarer Decoder verwendet, damit für das Training Gradienten vorhanden sind
6. Berechnung des Verlusts: Für jedes Trainingsbeispiel wird ein Verlust gerechnet und über mehrere Multi-Agent-Trajektorien (d.h. Trainingsbeispiel) Gesamtverlust aggregiert, z.B. über einen Batch von Trainingsbeispielen.
7. Anpassen des Encoders, Decoders und des Codebuchs in Richtung einer Abnahme des Gesamtverlusts: Hierfür können Gradienten über die Zeitpunkte (d.h. von dem Zustand einer Trajektorie zu einem früheren Zustand der Trajektorie) und durch den Encoder weitergegeben werden (mittels Backpropagation, sodass ein gradientenbasierter Optimierer für das Training verwendet werden kann.

Figur 2 veranschaulicht ein maschinelles Lernmodell 200 mit einer VQ-VAE-Architektur gemäß einer Ausführungsform.

Das maschinelle Lernmodell 200 enthält eine Encoder 201 und einen Decoder 202. Der Encoder 201 und/oder der Decoder sind oder enthalten ein oder mehrere neuronale Netze. Der Encoder 201 hat beispielsweise eine Transformer-Architektur. Der Decoder 202 hat beispielsweise eine DiffSim-Architektur mit mehreren neuralen Graphennetzwerken (GNNs) 206.

Im Training ist, wie oben beschrieben, jeder Datenpunkt (d.h. jedes Trainingsbeispiel) eine Multi-Agent-Trajektorie, die eine Trajektorie für jeden Agenten enthält. Jede Trajektorie ist dabei (für jedes Trainingsbeispiel) ein Beispiel, wie sich ein jeweiliger Fahrertyp (z.B. aggressiver Fahrer, langsamer Fahrer, etc.) in der Verkehrssituation (des Trainingsbeispiels) enthält.

Für jedes Trainingsbeispiel 208 (Folge von Zuständen bzw. Beobachtungen 209 für alle Agenten) erzeugt der Encoder 201 zunächst einen Wert 207 aus einem kontinuierlichen latenten Raum für jede der in der Multi-Agent-Trajektorie enthaltenen Trajektorien (d.h. anschaulich gesprochen hat jede Trajektorie ihren eigenen latenten Vektor). Dieser Wert ist beispielsweise der Mittelwert, der von einem VAE-Encoder geliefert wird. Für jede der in der Multi-Agent-Trajektorie enthaltenen Trajektorien wird dieser (kontinuierliche) vom Encoder gelieferte Wert auf seinen nächstgelegenen Codebuch-Vektor aus einem Codebuch 203 abgebildet (damit wird jeder Trajektorie ihr eigener Codebuch-Vektor zugeordnet). "Nächstgelegen" bezieht sich hierbei auf ein Ähnlichkeitsmaß wie die euklidische Metrik oder Kosinus-Ähnlichkeit.

Es werden also die zunächst erzeugten kontinuierlichen Werte quantisiert, sodass jede Trajektorie letztendlich auf ein Element eines diskreten latenten Raums (nämlich des Codebuchs 203) abgebildet wird und damit für jedes Trainingsbeispiel auf einen Satz von Codebuch-Vektoren abgebildet wird. Beim Training werden Encoder 201, Codebuch 203, und Decoder 202 trainiert.

Dem Decoder 202 wird (im Training und für die Inferenz) ein Satz von Codebuch-Vektoren sowie Information über eine Verkehrssituation zugeführt. Diese Information ist z.B. eine Startbeobachtung 204 ("Obs"), z.B. ein Beispielergebnis einer Objektdetektion, Karteninformationen etc.. Im Training ist die Information über die Verkehrssituation die Information aus dem Trainingsbeispiel. Bei der Inferenz ist dies die Information über die Verkehrssituation, in der Trajektorien simuliert werden sollen.

Der Decoder 202 erzeugt eine Multi-Agent-Trajektorie aus den ihm zugeführten Satz von Codebuch-Vektoren (d.h. er decodiert die ihm zugeführten Codebuch-Vektoren zu einer Multi-Agent-Trajektorie) für die Verkehrssituation, über die ihm Informationen zugeführt werden (d.h. die Startbeobachtung 204). Der Decoder 202 arbeitet dabei autoregressiv: Er erzeugt ein Stück Trajektorie (z.B. einen neuen Zustand für den nächsten Zeitpunkt gemäß einer Aktion des Agenten) für jeden Agenten, was eine neue Situation (und damit eine neue Beobachtung 205) liefert, erzeugt ausgehend von dieser ein weiteres Trajektorienstück (z.B. einen nachfolgenden Zustand) für jeden Agenten und so weiter. Damit wird sichergestellt, dass die simulierten Agenten sich bei ihrem Verhalten gegenseitig berücksichtigen.

Im Training wird der Encoder 201 trainiert (d.h. Parameter wie Gewichte etc. des Encoders werden angepasst), der Decoder 292 wird trainiert (d.h. Parameter wie Gewichte etc. des Decoders werden angepasst) und das Codebuch wird trainiert (d.h. auch die Codebuch-Vektor, die das Codebuch enthält, werden angepasst). Die Anpassung erfolgt in Richtung der Abnahme eines Verlusts (der typischerweise mittels Backpropagation in das maschinelle Lernmodell rückpropagiert wird). Um es zu ermöglichen, dass der Verlust bis in den Encoder rückpropagiert wird (obwohl dazu durch die Quantisierung rückpropagiert werden muss, die nicht differenzierbar ist, da auf zum nächstgelegenen Codebuch-Vektor quantisiert wird), wird hier (pro Trainingsbeispiel) gemäß einem Stopp-Gradient-Ansatz angenommen, dass der Abstand der vom Encoder 201 erzeugten kontinuierlichen latenten Vektoren zu den Codebuch-Vektoren konstant ist.

Pro Trainingsbeispiel wird ein Einzelverlust berechnet, der zu einem Gesamtverlust (z.B. für einen Batch) über mehrere Trainingsbeispiele aggregiert wird.

Der Einzelverlust eines Trainingsbeispiels enthält eines oder mehrere von
- einem Rekonstruktionsverlust: Verlust zwischen der Multi-Agent-Trajektorie des Trainingsbeispiels und der Multi-Agent-Trajektorie, die der Decoder 202 zu dem Trainingsbeispiel (aus dem Satz von Codebuch-Vektoren, auf den der Encoder 201 die Multi-Agent-Trajektorie des Trainingsbeispiels abgebildet hat und der Startbeobachtung 203 des Trainingsbeispiels) rekonstruiert hat, z.B. ein L2-Verlust (Unterschiede für jeden Zeitschritt und pro Agent quadradiert und summiert).
- einem MGAIL(Multi-Agent Generative Adversarial Imitation Learning)-Verlust z.B. eine Bewertung durch einen Diskriminator, ob die rekonstruierte Multi-Agent-Trajektorie echt ist oder durch den Decoder 202 erzeugt
- einen Realismusverlust, der es z.B. bestraft, wenn es bei der rekonstruierten Multi-Agent-Trajektorie zu Kollisionen kommt oder einer oder mehrere der Agenten Offroad fahren.
- einen Quantisierungsverlust (Unterschiede zwischen den kontinuierlichen latenten Vektoren und den Codebuch-Vektoren, auf die sie abgebildet werden)
- einen Codebuch-Verlust (z.B. Unterschied zwischen Codebuch-Vektor und dem Mittel aller kontinuierlichen latenten Vektoren, die auf diesen Codebuch-Vektor abgebildet werden)

Weitere Verlustkomponenten für ein Trainingsbeispiel können erzeugt werden, indem nicht nur eine Multi-Agent-Trajektorie rekonstruiert wird, sondern zu der Verkehrssituation des Trainingsbeispiels noch eine oder mehrere zusätzliche Multi-Agent-Trajektorien aus einen oder mehreren gesampelten Sätzen von Codebuch-Vektoren erzeugt werden. Für jede solche erzeugte zusätzliche Multi-Agent-Trajektorie kann der Einzelverlust für das Trainingsbeispiel dann noch eine oder mehrere der folgenden Verlustkomponenten enthalten:
- einen MGAIL-Verlust z.B. eine Bewertung durch einen Diskriminator, ob die erzeugte zusätzliche Multi-Agent-Trajektorie echt ist oder durch den Decoder 202 erzeugt
- einen Realismusverlust, der es z.B. bestraft, wenn es bei der erzeugten zusätzliche Multi-Agent-Trajektorie zu Kollisionen kommt oder einer oder mehrere der Agenten Offroad fahren.

Die Verlustkomponenten auf der Basis der ein oder mehreren erzeugten Multi-Agent-Trajektorie dienen dazu, dass Problem der kausalen Verwirrung zu lösen. Die ein oder mehreren erzeugten Multi-Agent-Trajektorien brauchen nicht mit der Multi-Agent-Trajektorie übereinzustimmen (deshalb enthält der Einzelverlust für das Trainingsbeispiel keinen Rekonstruktionsverlust für diese Multi-Agent-Trajektorien) aber sollten auch realistisch sein

In den obigen Beispielen wurden Multi-Agent-Trajektorien zum Testen einer Fahrzeugsteuerung trainiert. Analog kann jedoch auch beim Testen von Steuerungen anderer Robotervorrichtungen vorgegangen werden und es können dazu auch Multi-Agent-Trajektorien für andere Objekte wie sie in einer Steuerungssituation vorkommen können, trainiert werden, wie z.B. allgemein Verkehrsteilnehmer, z.B. Fußgänger und Radfahrer oder auch Tiere. Beispielsweise kann die Bewegung eines Roboterarms, der mit anderen Roboterarmen zusammenarbeitet, demonstriert werden, eine Steuerungsstrategie für den Roboterarm trainiert werden und dann in einer Simulation eine Robotersteuerung dahingehend getestet werden, ob sie mit anderen Roboterarmen oder auch menschlichen Benutzern korrekt (oder auch ohne Unfälle oder Schäden an bearbeiteten Objekten) zusammenarbeitet. Entsprechend sind die erzeugten Trajektorien Trajektorien für jegliche Art von Agent (z.B. bewegliches Objekt), der in einer Steuerungssituation vorkommen kann, für der eine Steuerungsstrategie für eine Robotervorrichtung getestet werden soll. Der Begriff "Robotervorrichtung" kann als sich auf irgendein technisches System (mit einem mechanischen Teil, dessen Bewegung gesteuert wird) beziehend verstanden werden, wie z. B. eine computergesteuerte Maschine, ein Fahrzeug, ein Haushaltsgerät, ein Elektrowerkzeug, eine Fertigungsmaschine, einen persönlichen Assistenten oder ein Zugangssteuersystem. Gemäß einer Ausführungsform wird mittels des trainierten maschinellen Lernmodells (das Multi-Agent-Trajektorien liefert) eine Steuerungsvorschrift für das technische System getestet und das technische System dann (bei erfolgreichem Test) entsprechend gesteuert (bzw. betrieben).

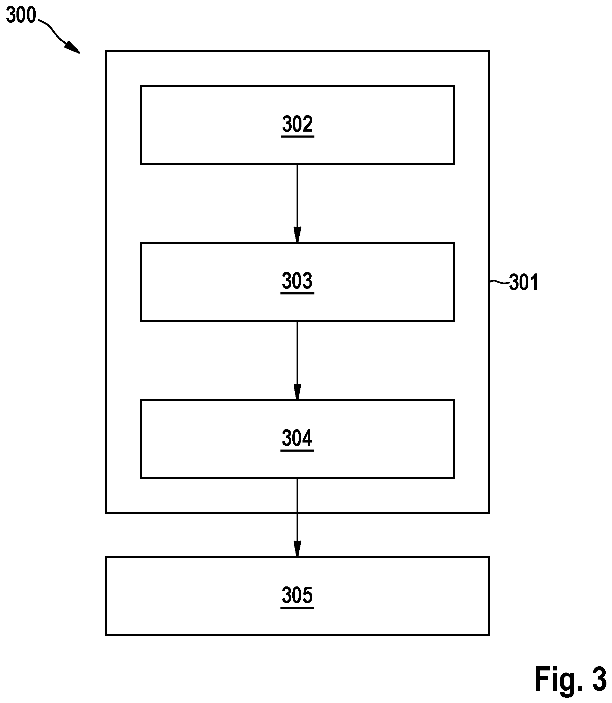

Zusammengefasst wird gemäß verschiedenen Ausführungsformen ein Verfahren bereitgestellt, wie in Figur 3 dargestellt.

Figur 3 zeigt ein Ablaufdiagramm 300, das ein Verfahren zum Trainieren eines maschinellen Lernmodells, Trajektorien von Agenten für eine Simulation zum Testen einer Steuerungsstrategie einer Robotervorrichtung zu erzeugen, gemäß einer Ausführungsform veranschaulicht.

In 301 wird für jede Trainings-Multi-Agent-Trajektorie aus einer Menge von Trainings-Multi-Agent-Trajektorien, wobei jede Trainings-Multi-Agent-Trajektorie für jeden Agenten mehrerer Agenten eine jeweilige Trainings-Agenten-Trajektorie enthält
- in 302 die Trainings-Multi-Agent-Trajektorie mittels eines Encoders codiert, wobei der Encoder jede Trainings-Agenten-Trajektorie der Trainings-Multi-Agent-Trajektorie auf einen jeweiligen Vektor eines kontinuierlichen latenten Raums abbildet und den Vektor auf denjenigen Codebuch-Vektor aus einem trainierbaren Codebuch, das Vektoren aus dem kontinuierlichen latenten Raum enthält, abbildet, der dem Vektor am nächsten liegt
- in 303 eine Rekonstruktion der Trainings-Multi-Agent-Trajektorie aus den Codebuch-Vektoren, auf den die Vektoren aus dem kontinuierlichen latenten Raum abgebildet wurden, mittels eines autoregressiven Decoders erzeugt und
- in 304 ein Rekonstruktionsverlust zwischen der Rekonstruktion der Trainings-Multi-Agent-Trajektorie und der Trainings-Multi-Agent-Trajektorie sowie ein Quantisierungsverlusts zwischen den Vektoren aus dem kontinuierlichen latenten Raum und den Codebuch-Vektoren, auf den sie abgebildet werden, ermittelt

In 305 werden der Encoders, der Decoder und das Codebuch zum Reduzieren eines Verlusts, der zumindest die Rekonstruktionsverluste und die Quantisierungsverluste enthält.

Gemäß verschiedenen Ausführungsformen wird mit anderen Worten ein maschinelles Lernmodell zur Erzeugung von Multi-Agent-Trajektorien (z.B. im Kontext von autonomen Fahren ein für ein Multi-Agenten-Fahrermodell bereitgestellt), das eine VQ-VAE-Architektur hat. Multi-Agent-Trajektorien werden gemäß einer Ausführungsform also mittels eines vektorquantisierten Variations-Autoencoders erzeugt. Beispielsweise wird ein Verkehrsagentenmodell für Simulationen für autonomes Fahren auf verschiedene Fahrertypen konditioniert.

Das Verfahren von Figur 3 kann durch einen oder mehrere Computer mit einer oder mehreren Datenverarbeitungseinheiten durchgeführt werden. Der Begriff "Datenverarbeitungseinheit" kann als irgendein Typ von Entität verstanden werden, die die Verarbeitung von Daten oder Signalen ermöglicht. Die Daten oder Signale können beispielsweise gemäß mindestens einer (d.h. einer oder mehr als einer) speziellen Funktion behandelt werden, die durch die Datenverarbeitungseinheit durchgeführt wird. Eine Datenverarbeitungseinheit kann eine analoge Schaltung, eine digitale Schaltung, eine Logikschaltung, einen Mikroprozessor, einen Mikrocontroller, eine Zentraleinheit (CPU), eine Graphikverarbeitungseinheit (GPU), einen Digitalsignalprozessor (DSP), eine integrierte Schaltung einer programmierbaren Gatteranordnung (FPGA) oder irgendeine Kombination davon umfassen oder aus dieser ausgebildet sein. Irgendeine andere Weise zum Implementieren der jeweiligen Funktionen, die hierin genauer beschrieben werden, kann auch als Datenverarbeitungseinheit oder Logikschaltungsanordnung verstanden werden. Es können ein oder mehrere der im Einzelnen hier beschriebenen Verfahrensschritte durch eine Datenverarbeitungseinheit durch eine oder mehrere spezielle Funktionen ausgeführt (z. B. implementiert) werden, die durch die Datenverarbeitungseinheit durchgeführt werden.

Das Verfahren ist also gemäß verschiedenen Ausführungen insbesondere computerimplementiert.

## Patentansprüche

1. Verfahren zum Trainieren eines maschinellen Lernmodells (200), Trajektorien von Agenten für eine Simulation zum Testen einer Steuerungsstrategie einer Robotervorrichtung (101) zu erzeugen, aufweisend:
für jede Trainings-Multi-Agent-Trajektorie (208) aus einer Menge von Trainings-Multi-Agent-Trajektorien, wobei jede Trainings-Multi-Agent-Trajektorie (208) für jeden Agenten mehrerer Agenten eine jeweilige Trainings-Agenten-Trajektorie enthält,
Codieren der Trainings-Multi-Agent-Trajektorie (208) mittels eines Encoders (201), wobei der Encoder (201) jede Trainings-Agenten-Trajektorie der Trainings-Multi-Agent-Trajektorie (208) auf einen jeweiligen Vektor eines kontinuierlichen latenten Raums abbildet und den Vektor auf denjenigen Codebuch-Vektor aus einem trainierbaren Codebuch (203), das Vektoren aus dem kontinuierlichen latenten Raum enthält, abbildet, der dem Vektor am nächsten liegt,
Erzeugen einer Rekonstruktion der Trainings-Multi-Agent-Trajektorie aus den Codebuch-Vektoren, auf den die Vektoren aus dem kontinuierlichen latenten Raum abgebildet wurden, mittels eines autoregressiven Decoders (202),
Ermitteln eines Rekonstruktionsverlusts zwischen der Rekonstruktion der Trainings-Multi-Agent-Trajektorie und der Trainings-Multi-Agent-Trajektorie (208) sowie eines Quantisierungsverlusts zwischen den Vektoren aus dem kontinuierlichen latenten Raum und den Codebuch-Vektoren, auf den sie abgebildet werden, und
Trainieren des Encoders (201), des Decoders (202) und des Codebuchs (203) zum Reduzieren eines Verlusts, der zumindest die Rekonstruktionsverluste und die Quantisierungsverluste enthält.

2. Verfahren nach Anspruch 1, aufweisend Bereitstellen der Menge von Trainings-Multi-Agent-Trajektorien, wobei, für jede Trainings-Multi-Agent-Trajektorie (208) und für jeden Agenten, die Trainings-Agenten-Trajektorie, die die Trainings-Multi-Agent-Trajektorie (208) für den Agenten enthält, gemäß einem jeweiligen Agentenverhaltenstyp ausgestaltet ist, wobei sich die Agentenverhaltenstypen zumindest für manche der Trainings-Multi-Agent-Trajektorien (208) und/oder der Trainings-Agenten-Trajektorien unterscheiden.

3. Verfahren nach Anspruch 1 oder 2, wobei der Verlust ferner einen Verlust aufweist, der es bestraft, wenn eine oder mehrere der rekonstruierten Trainings-Multi-Agent-Trajektorien kein realistisches Verhalten aufweisen.

4. Verfahren nach einem der Ansprüche 1 bis 3, wobei der Quantisierungsverlust für jede Trainings-Agenten-Trajektorie den Quantisierungsfehler zwischen dem Vektor aus dem kontinuierlichen latenten Raum und dem Codebuch-Vektor, auf den er abgebildet wird, enthält.

5. Verfahren nach einem der Ansprüche 1 bis 4, wobei der Verlust ferner einen Multi-Agent-Generatives-Adversarial-Imitations-Lernen-Verlust der Rekonstruktionen der Trainings-Multi-Agent-Trajektorien aufweist.

6. Verfahren nach einem der Ansprüche 1 bis 5, wobei jede Trainings-Multi-Agent-Trajektorie (208) eine Trainings-Multi-Agent-Trajektorie (208) für eine jeweilige Steuerungssituation ist und der autoregressive Decoder (202) die Trainings-Multi-Agent-Trajektorie (208) unter Verwendung von ihm zugeführten Informationen über die jeweiligen Steuerungssituation (204) rekonstruiert.

7. Verfahren nach Anspruch 6, ferner aufweisend, für jede zumindest eines Teils der Multi-Agenten-Trajektorie,
Erzeugen von oder mehreren zusätzlichen Multi-Agenten-Trajektorien durch Auswählen eines Codebuch-Vektors für jeden der mehreren Agenten, für den die Multi-Agenten-Trajektorie eine Trajektorie enthält und Zuführen der ausgewählten Menge von Codebuch-Vektoren und den Informationen über die jeweilige Steuerungssituation (204) zu dem Decoder (202),
wobei der Verlust ein oder mehrere zusätzliche Verlustkomponenten abhängig von den erzeugten zusätzlichen Multi-Agenten-Trajektorien enthält.

8. Verfahren nach Anspruch 7, wobei die zusätzlichen Verlustkomponenten Verlustkomponenten aufweisen, die es bestrafen wenn eine oder mehrere der erzeugten zusätzlichen Multi-Agenten-Trajektorien kein realistisches Verhalten aufweisen und oder Multi-Agent-Generatives-Adversarial-Imitations-Lernen-Verluste der erzeugten zusätzlichen Multi-Agenten-Trajektorien aufweisen.

9. Trainingseinrichtung, die eingerichtet ist, das Verfahren nach einem der Ansprüche 1 bis 8 durchzuführen.

10. Verfahren zum Erzeugen einer Multi-Agenten-Trajektorie, die für jeden mehrerer Agenten eine Trajektorie enthält, für eine Steuerungssituation aufweisend:
Trainieren eines maschinellen Lernmodells (200) nach einem der Ansprüche 1 bis 8,
Auswählen einer Menge von Codebuch-Vektoren aus dem Codebuch (203), durch Auswählen eines Codebuch-Vektors für jeden der mehreren Agenten,
Erzeugen der Multi-Agenten-Trajektorie durch Zuführen der ausgewählten Menge von Codebuch-Vektoren und Informationen über die Steuerungssituation (204) zu dem Decoder (202).

11. Verfahren zum Testen eines Steuerungsverfahrens für eine Robotervorrichtung (101), aufweisend Simulieren eines Steuerszenarios mit einem oder mehreren Agenten, wobei der eine oder die mehreren Agenten gemäß Trajektorien gesteuert werden, die durch das Verfahren nach Anspruch 10 erzeugt werden, und die Robotervorrichtung (101) gemäß dem Steuerungsverfahren gesteuert wird.

12. Testeinrichtung, die eingerichtet ist, das Verfahren nach Anspruch 11 durchzuführen.

13. Computerprogramm mit Befehlen, die, wenn sie durch einen Prozessor ausgeführt werden, bewirken, dass der Prozessor ein Verfahren nach einem der Ansprüche 1 bis 8 oder 10 oder 11 durchführt.

14. Computerlesbares Medium, das Befehle speichert, die, wenn sie durch einen Prozessor ausgeführt werden, bewirken, dass der Prozessor ein Verfahren nach einem der Ansprüche 1 bis 8 oder 10 oder 11 durchführt.

## Geänderte Patentansprüche

### Geänderte Patentansprüche gemäss Regel 137(2) EPÜ.

1. Computerimplementiertes Verfahren zum Trainieren eines maschinellen Lernmodells (200), Trajektorien von Agenten für eine Simulation zum Testen einer Steuerungsstrategie einer Robotervorrichtung (101) zu erzeugen, aufweisend:
für jede Trainings-Multi-Agent-Trajektorie (208) aus einer Menge von Trainings-Multi-Agent-Trajektorien, wobei jede Trainings-Multi-Agent-Trajektorie (208) für jeden Agenten mehrerer Agenten eine jeweilige Trainings-Agenten-Trajektorie enthält,
Codieren der Trainings-Multi-Agent-Trajektorie (208) mittels eines Encoders (201), wobei der Encoder (201) jede Trainings-Agenten-Trajektorie der Trainings-Multi-Agent-Trajektorie (208) auf einen jeweiligen Vektor eines kontinuierlichen latenten Raums abbildet und den Vektor auf denjenigen Codebuch-Vektor aus einem trainierbaren Codebuch (203), das Vektoren aus dem kontinuierlichen latenten Raum enthält, abbildet, der dem Vektor am nächsten liegt,
Erzeugen einer Rekonstruktion der Trainings-Multi-Agent-Trajektorie aus den Codebuch-Vektoren, auf den die Vektoren aus dem kontinuierlichen latenten Raum abgebildet wurden, mittels eines autoregressiven Decoders (202),
Ermitteln eines Rekonstruktionsverlusts zwischen der Rekonstruktion der Trainings-Multi-Agent-Trajektorie und der Trainings-Multi-Agent-Trajektorie (208) sowie eines Quantisierungsverlusts zwischen den Vektoren aus dem kontinuierlichen latenten Raum und den Codebuch-Vektoren, auf den sie abgebildet werden, und
Trainieren des Encoders (201), des Decoders (202) und des Codebuchs (203) zum Reduzieren eines Verlusts, der zumindest die Rekonstruktionsverluste, die Quantisierungsverluste und einen Verlust aufweist, der es bestraft, wenn eine oder mehrere der rekonstruierten Trainings-Multi-Agent-Trajektorien kein realistisches Verhalten aufweisen, enthält.

2. Verfahren nach Anspruch 1, aufweisend Bereitstellen der Menge von Trainings-Multi-Agent-Trajektorien, wobei, für jede Trainings-Multi-Agent-Trajektorie (208) und für jeden Agenten, die Trainings-Agenten-Trajektorie, die die Trainings-Multi-Agent-Trajektorie (208) für den Agenten enthält, gemäß einem jeweiligen Agentenverhaltenstyp ausgestaltet ist, wobei sich die Agentenverhaltenstypen zumindest für manche der Trainings-Multi-Agent-Trajektorien (208) und/oder der Trainings-Agenten-Trajektorien unterscheiden.

3. Verfahren nach einem der Ansprüche 1 oder 2, wobei der Quantisierungsverlust für jede Trainings-Agenten-Trajektorie den Quantisierungsfehler zwischen dem Vektor aus dem kontinuierlichen latenten Raum und dem Codebuch-Vektor, auf den er abgebildet wird, enthält.

4. Verfahren nach einem der Ansprüche 1 bis 3, wobei der Verlust ferner einen Multi-Agent-Generatives-Adversarial-Imitations-Lernen-Verlust der Rekonstruktionen der Trainings-Multi-Agent-Trajektorien aufweist.

5. Verfahren nach einem der Ansprüche 1 bis 4, wobei jede Trainings-Multi-Agent-Trajektorie (208) eine Trainings-Multi-Agent-Trajektorie (208) für eine jeweilige Steuerungssituation ist und der autoregressive Decoder (202) die Trainings-Multi-Agent-Trajektorie (208) unter Verwendung von ihm zugeführten Informationen über die jeweiligen Steuerungssituation (204) rekonstruiert.

6. Verfahren nach Anspruch 5, ferner aufweisend, für jede zumindest eines Teils der Multi-Agenten-Trajektorie,
Erzeugen von oder mehreren zusätzlichen Multi-Agenten-Trajektorien durch Auswählen eines Codebuch-Vektors für jeden der mehreren Agenten, für den die Multi-Agenten-Trajektorie eine Trajektorie enthält und Zuführen der ausgewählten Menge von Codebuch-Vektoren und den Informationen über die jeweilige Steuerungssituation (204) zu dem Decoder (202),
wobei der Verlust ein oder mehrere zusätzliche Verlustkomponenten abhängig von den erzeugten zusätzlichen Multi-Agenten-Trajektorien enthält.

7. Verfahren nach Anspruch 6, wobei die zusätzlichen Verlustkomponenten Verlustkomponenten aufweisen, die es bestrafen wenn eine oder mehrere der erzeugten zusätzlichen Multi-Agenten-Trajektorien kein realistisches Verhalten aufweisen und oder Multi-Agent-Generatives-Adversarial-Imitations-Lernen-Verluste der erzeugten zusätzlichen Multi-Agenten-Trajektorien aufweisen.

8. Trainingseinrichtung, die eingerichtet ist, das Verfahren nach einem der Ansprüche 1 bis 7 durchzuführen.

9. Verfahren zum Erzeugen einer Multi-Agenten-Trajektorie, die für jeden mehrerer Agenten eine Trajektorie enthält, für eine Steuerungssituation aufweisend:
Trainieren eines maschinellen Lernmodells (200) nach einem der Ansprüche 1 bis 7,
Auswählen einer Menge von Codebuch-Vektoren aus dem Codebuch (203), durch Auswählen eines Codebuch-Vektors für jeden der mehreren Agenten,
Erzeugen der Multi-Agenten-Trajektorie durch Zuführen der ausgewählten Menge von Codebuch-Vektoren und Informationen über die Steuerungssituation (204) zu dem Decoder (202).

10. Verfahren zum Testen eines Steuerungsverfahrens für eine Robotervorrichtung (101), aufweisend Simulieren eines Steuerszenarios mit einem oder mehreren Agenten, wobei der eine oder die mehreren Agenten gemäß Trajektorien gesteuert werden, die durch das Verfahren nach Anspruch 9 erzeugt werden, und die Robotervorrichtung (101) gemäß dem Steuerungsverfahren gesteuert wird.

11. Testeinrichtung, die eingerichtet ist, das Verfahren nach Anspruch 10 durchzuführen.

12. Computerprogramm mit Befehlen, die, wenn sie durch einen Prozessor ausgeführt werden, bewirken, dass der Prozessor ein Verfahren nach einem der Ansprüche 1 bis 7 oder 9 oder 10 durchführt.

13. Computerlesbares Medium, das Befehle speichert, die, wenn sie durch einen Prozessor ausgeführt werden, bewirken, dass der Prozessor ein Verfahren nach einem der Ansprüche 1 bis 7 oder 9 oder 10 durchführt.
